# EUROPÄISCHE PATENTSCHRIFT

(11) **EP 3 784 858 B1**
(45) Veröffentlichungstag und Bekanntmachung des Hinweises auf die Patenterteilung: **08.05.2024**
(21) Anmeldenummer: 19710356.7
(22) Anmeldetag: 05.03.2019
(51) Int. Cl.: E05D 11/08, B60R 5/02

(54) **ABGEDICHTETES STAUFACH FÜR EIN KRAFTFAHRZEUG UND KRAFTFAHRZEUG MIT EINEM SOLCHEN STAUFACH**
SEALED STOWAGE COMPARTMENT FOR A MOTOR VEHICLE, AND MOTOR VEHICLE HAVING SUCH A STOWAGE COMPARTMENT
COMPARTIMENT DE RANGEMENT ÉTANCHÉIFIÉ POUR UN VÉHICULE AUTOMOBILE ET VÉHICULE AUTOMOBILE COMPRENANT UN COMPARTIMENT DE RANGEMENT DE CE TYPE

(30) Priorität: 24.04.2018 DE 102018206316
(43) Veröffentlichungstag der Anmeldung: 03.03.2021
(73) Patentinhaber: Audi AG, 85045 Ingolstadt (DE)
(72) Erfinder: RUCKER, Matthias, 85139 Wettstetten (DE); PFLAUMBAUM, Klaus, 85080 Gaimersheim (DE); ROIGER, Ernst, 85080 Gaimersheim (DE)
(86) Internationale Anmeldenummer: PCT/EP2019/055380
(87) Internationale Veröffentlichungsnummer: WO 2019/206499

(56) Entgegenhaltungen:
- WO-A1-2017/054727
- DE-A1-102010 029 102
- FR-A1- 2 899 177
- KR-A- 20050 025 715
- US-A1- 2009 039 679
- US-A1- 2013 175 821
- US-B1- 6 349 449

## Beschreibung

Die Erfindung betrifft ein Staufach gemäß dem Oberbegriff von Anspruch 1 für ein Kraftfahrzeug, wobei das Staufach dazu eingerichtet ist unterhalb eines Haubenelements des Kraftfahrzeugs angeordnet zu werden. Ferner betrifft die Erfindung ein Kraftfahrzeug mit einem solchen Staufach.

Bei Fahrzeugen mit einem Mittelmotor oder einem Heckmotor oder bei Elektrofahrzeugen kann ein Raum unter einer Vorderklappe für ein Staufach oder einen Kofferraum genutzt werden. Es können beispielsweise Werkzeuge, Tire-Fit-Teile, Elektroladekabel für elektrifizierte Antriebe darin untergebracht werden. Es ist bekannt ein Staufach wannenartig auszubilden und mit einem Dekor auszukleiden, so dass ein unter der Vorderklappe befindlicher Kofferraum gebildet ist. Dabei ist dieser Kofferraum mittels einer umlaufenden Dichtungsanordnung zur Unterseite der Vorderklappe hin ausgebildet, so dass der Kofferraum gegen Umwelteinflüsse wie Nässe, Staub und dergleichen abgedichtet ist. Ferner sind auch nicht abgedichtete wannenartige Staufächer aus Kunststoff bekannt, die durch Öffnen der Vorderklappe zugänglich sind.

Ein gattungsgemäßes Staufach ist beispielsweise aus der FR 2 899 177 A1 bekannt.

Ferner ist es aus der US 6 349 449 B1, die der DE 197 26 536 A1 entspricht, bekannt, eine Schwenkbremse für eine Klappe eines Stauraums einzusetzen.

Aus der DE 10 2005 059 264 A1 ist eine Motorhaube bekannt, die einen schwenkbar an der Innenseite der Motorhaube angeordneten Stauraum für Werkzeug, Putztücher und dergleichen aufweist.

Die DE 10 2011 122 321 A1 zeigt ein Klappenbauteil mit einem Versteifungselement, wobei in dem Versteifungselement Formlöcher ausgebildet sind, in die eine Staufach mit Abdeckung einsetzbar ist.

Die KR 2005 0025715 A zeigt ein Verriegelungselement für eine Motorhaube.

Zur Erfüllung von Fußgängerschutzerfordernissen ist es notwendig, dass eine Dichtlinie für Vorderklappen, die einen Kofferraum abdecken, nicht in einem Aufschlagbereich liegen darf oder mit besonderen Maßnahmen labil ausgelegt werden muss. Dies erfordert spezielle konstruktive Maßnahmen, die kostensteigernd sind. Wird der Kofferraum zu stark beladen, kann es vorkommen, dass die Vorderklappe beschädigt oder abschnittsweise verformt wird beim Verschließen des Kofferraums. Die Nutzung von nicht abgedichteten Staufächern ist eingeschränkt und entsprechend mit Komforteinbußen verbunden.

Die der Erfindung zu Grunde liegende Aufgabe wird darin gesehen, ein Staufach für ein Kraftfahrzeug bereitzustellen, das die obigen Nachteile vermeidet.

Diese Aufgabe wird gelöst durch ein Staufach mit den Merkmalen des Patentanspruchs 1 und durch eine Kraftfahrzeug mit den Merkmalen des Patentanspruchs 11. Vorteilhafte Ausgestaltungen mit zweckmäßigen Weiterbildungen sind in den abhängigen Patentansprüchen angegeben.

Entsprechend wird ein Staufach für ein Kraftfahrzeug vorgeschlagen, das dazu eingerichtet ist unterhalb eines Haubenelements des Kraftfahrzeugs angeordnet zu werden, wobei das Haubenelement einen Teil der Außenhaut des Kraftfahrzeugs bildet, wobei das Staufach umfasst:
einen wannenartigen Behälter; einen mit dem Behälter verbindbaren oder verbundenen Deckel, wobei der Deckel relativ zum Behälter um eine Schwenkachse zwischen einer Schließstellung und einer Öffnungsstellung beweglich ist, und eine Scharniervorrichtung, welche die Schwenkbewegung des Deckels relativ zum Behälter ermöglicht. Dabei ist vorgesehen, dass die Scharniervorrichtung derart ausgebildet ist, dass der Deckel ab einem Minimalöffnungswinkel und bis zu einem Maximalöffnungswinkel selbsttätig in einer beliebigen Öffnungsstellung gehalten wird, und dass der Deckel unterhalb des Minimalöffnungswinkels schwerkraftbedingt selbsttätig in seine Schließstellung übergeht.

Hierdurch kann eine einfache Bedienung des Deckels bei geöffnetem Haubenelement erfolgen. Insbesondere kann das Beladen und Entladen des Staufachs bei geöffnetem Deckel sicher durchgeführt werden. Ferner wird das zuverlässige Verschließen des Staufachs unterstützt durch das selbsttätige Schließen des Deckel unterhalb eines für die Be- bzw. Entladung nicht mehr relevanten Öffnungswinkels.

Der Deckel weist eine Verriegelungseinrichtung auf, die dazu eingerichtet ist, den Deckel in seiner Schließstellung an dem Behälter lösbar zu verriegeln. Hierdurch wird sichergestellt, dass der Deckel in seiner Schließstellung zuverlässig auf dem Behälter aufliegt und diesen verschließt.

Die Verriegelungseinrichtung weist erfindungsgemäß ein am Deckel abgestütztes und federvorgespanntes Hebelelement auf mit einem Rastabschnitt und einem Betätigungsabschnitt.

Dabei steht der Rastabschnitt in der Schließstellung des Deckels mit einem korrespondierenden Stützabschnitt des Behälters in Eingriff, so dass sich die Verriegelungseinrichtung in einer Verriegelungsstellung befindet. Somit sind der Deckel und der Behälter in der Verriegelungsstellung zuverlässig gegeneinander verspannt und gesichert.

Der Betätigungsabschnitt kann dazu eingerichtet sein, den Rastabschnitt relativ zum Behälter und entgegen der Federvorspannkraft zu bewegen, so dass der Eingriff zwischen dem Rastabschnitt und dem Stützabschnitt gelöst wird. Dabei kann der Betätigungsabschnitt hebelartig ausgebildet sein. Der Betätigungsabschnitt ermöglicht eine leichtgängige und insbesondere einhändige Bedienung, so dass der Deckel einfach geöffnet werden kann.

Die Verrieglungseinrichtung ist erfindungsgemäß dazu eingerichtet, beim schwerkraftbedingten Schließen des Deckels selbsttätig die Verriegelungsstellung einzunehmen. Somit ist sichergestellt, dass der Deckel beim selbsttätigen schließen unterhalb des Minimalöffnungswinkels auch zuverlässig verriegelt wird. Dies vereinfacht die Bedienung, weil es möglich ist, den Deckel aus einer Öffnungsstellung einhändig nach unten zu bewegen bis er unterhalb des Minimalöffnungswinkels selbsttätig schließt und dann auch verriegelt wird.

Der Maximalöffnungswinkel des Deckels kann derart begrenzt sein, dass zwischen einer Oberseite des Deckels und einer Unterseite des Haubenelements ein spitzer Winkel gebildet ist, wenn das Haubenelement bei maximal geöffnetem Deckel an diesem anliegt. Hierdurch wird gewährleistet, dass ein Verkeilen zwischen dem Deckel und dem Haubenelement verhindert werden kann. Insbesondere wird der Deckel durch das sich nach unten bewegende Haubenelement beaufschlagt und von seiner Öffnungsstellung in Richtung der Schließstellung bewegt. Das heißt, der Deckel gleitet mit einem Kontaktabschnitt entlang der Innenseite des Haubenelements bis er sich unterhalb des Minimalöffnungswinkels befindet, von wo der Deckel schwerkraftbedingt selbsttätig in seine Schließstellung fällt und sich von dem Haubenelement entfernt.

In der Schließstellung des Deckels kann zwischen dem Deckel und dem Behälter entlang eines dem Deckel zugewandten Behälterrandabschnitts eine Dichtungsanordnung vorgesehen sein, so dass der Behälter durch den Deckel dicht verschlossen ist. Dabei kann die Dichtungsanordnung an dem Deckel oder/und an dem Behälterrandabschnitt angeordnet sein. Hierdurch kann das Innere des Staufachs vor Umwelteinflüssen wie Nässe, Staub und dergleichen geschützt werden.

Der Deckel kann ferner einen umlaufenden Deckelrandabschnitt aufweisen, der sich in der Schließstellung des Deckels über eine Behälteroberkante hinaus nach unten erstreckt. Hierdurch wird einem seitlichen Eindringen von Nässe, Staub und dergleichen entgegengewirkt.

Zwischen einer Innenseite des Deckelrandabschnitts und einer Außenseite eines Behälterrandabschnitts kann ein Entlüftungsweg ausgebildet sein zwischen dem Innenraum des Behälters und der Umgebung, wobei der Entlüftungsweg insbesondere durch eine Aussparung in der Dichtungsanordnung gebildet ist. Dies ermöglicht beim selbsttätigen Schließen des Deckels das zuverlässige und rasche Entweichen von Luft aus dem Inneren des Behälters, so dass das der Deckel nicht durch ein Luftpolster am sichern Schlie-βen gehindert wird.

Die Scharniervorrichtung kann ein Reibscharnier sein. Hierdurch kann das gewünschte Verhalten des Deckels in Bezug auf den Minimalöffnungswinkel bzw. den Maximalöffnungswinkel eingestellt werden.

Der Behälter und der Deckel können aus einem witterungsbeständigen Kunststoff hergestellt sein. Dies ermöglicht den Einbau unterhalb des Haubenelements ohne dass das Haubenelement speziell abgedichtet werden muss.

Die Scharniervorrichtung kann mit dem Deckel verbunden sein und einen vom Deckel abgewandten freien Kopplungsabschnitt aufweisen, der in einer korrespondierende Kopplungsöffnung an dem Behälter lösbar befestigt ist, wobei die Kopplungsöffnung an einer Außenseite des Behälters angeordnet ist. Insbesondere kann der Kopplungsabschnitt in die Kopplungsöffnung einsteckbar sein. Dies ermöglicht ein einfaches Zusammenbauen des Staufachs bzw. das nachträgliche Einsetzen des Deckels, wenn der Behälter bereits im Kraftfahrzeug verbaut ist.

Die oben genannte Aufgabe wird ebenfalls gelöst durch ein Kraftfahrzeug mit einer Karosserie, wobei die Karosserie wenigstens ein Haubenelement umfasst, das in einem geschlossenen Zustand einen von der Karosserie begrenzten Stauraum abdeckt, wobei in dem Stauraum ein Staufach mit wenigstens einem der oben genannten Merkmale aufgenommen ist.

Weitere Vorteile, Merkmale und Einzelheiten der Erfindung ergeben sich aus den Patentansprüchen, der nachfolgenden Beschreibung bevorzugter Ausführungsformen sowie anhand der Zeichnungen. Dabei zeigt:
- Fig. 1: in den Teilfiguren A) und B) zwei perspektivische Darstellungen eines Staufachs;
- Fig. 2: in Teilfigur A) das Staufach der Fig. 1 mit unterschiedlichen Öffnungsstellungen des Deckels, in Teilfigur B) eine schematische Darstellung der Öffnungswinkel und in Teilfigur C) das Anbringen eines Deckels an einem Behälter des Staufachs;
- Fig. 3: eine schematische Schnittzeichnung des Staufachs in Relation zu einem Haubenelement eines Kraftfahrzeugs;
- Fig. 4: in den Teilfiguren A) und B) vereinfache und schematische Teilschnittdarstellungen von Dichtungsbereichen zwischen Deckel und Behälter des Staufachs;
- Fig. 5: eine vereinfachte und schematische Schnittdarstellung eines Betätigungselements.

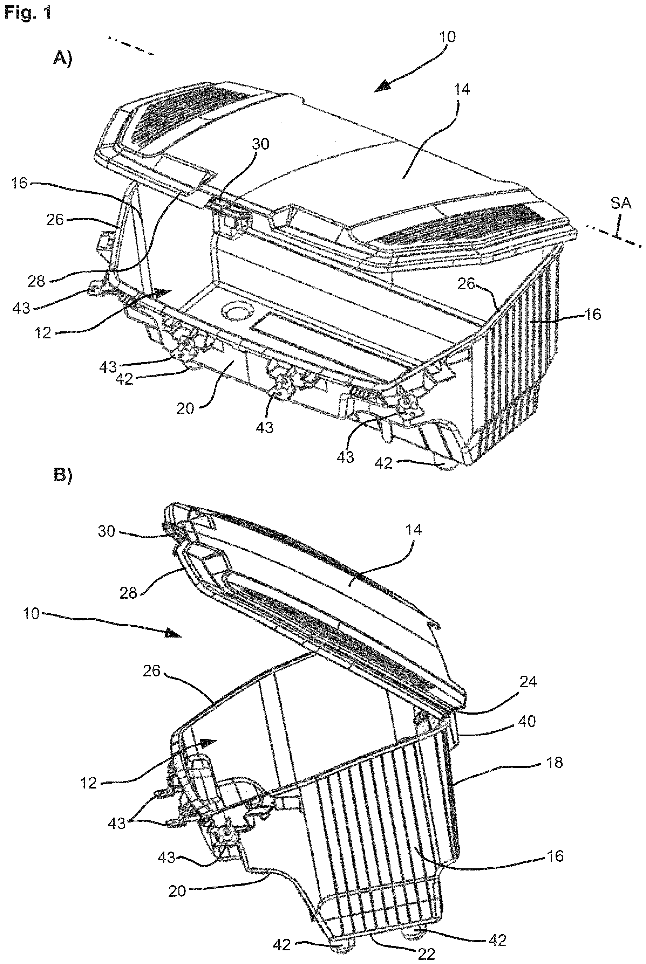

Figur 1 zeigt in den Teilfiguren A) und B) schematische und vereinfachte Perspektivdarstellungen eines Staufachs 10 aus unterschiedlichen Blickwinkeln. Das Staufach 10 umfasst einen Behälter 12 und einen Deckel 14. Der Behälter 12 weist zwei seitliche Wände 16, eine Rückwand 18, eine Vorderwand 20 und einen Boden 22 auf. Die seitlichen Wände 16, die Rückwand 18 und die Vorderwand 20 weisen eine jeweilige Formgebung auf, die auf einen Einbauort in einem nicht dargestellten Kraftfahrzeug abgestimmt ist. Entsprechend ist die hier dargestellte Formgebung für den Behälter 12 rein beispielhaft. Der Behälter 12 weist insgesamt eine wannenartige Ausgestaltung auf.

Der Deckel 14 ist relativ zum Behälter 12 um eine Schwenkachse SA beweglich. Hierzu ist der Deckel 14 mittels wenigstens einem Scharnier 24 mit dem Behälter 12 verbunden. Entsprechend kann der Deckel 14 ausgehend von einer Schließstellung, in der er auf einem oberen Randabschnitt 26 des Behälters aufliegt, in unterschiedliche Öffnungsstellungen bewegt werden. An einem vorderen Randabschnitt 28 des Deckels 14 ist ein Bedienelement 30 vorgesehen. Das Bedienelement 30 ist insbesondere dazu eingerichtet, dass der Deckel 14 einhändig aus seiner Schließstellung in eine Öffnungsstellung gebracht werden kann.

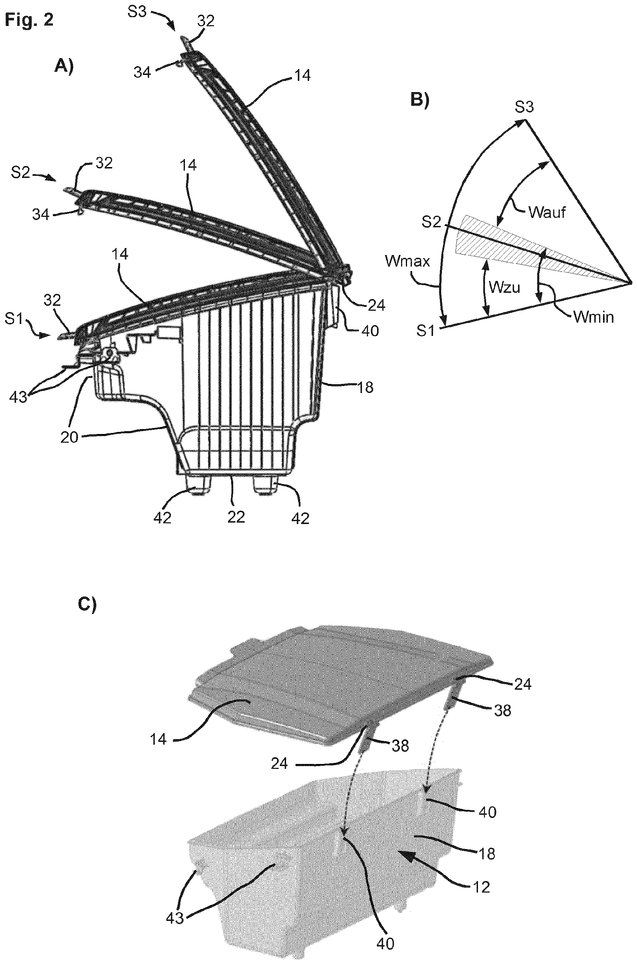

Figur 2A zeigt das Staufach 10 der Figur 1 in einer seitlichen Draufsicht. Der Deckel 14 ist dabei in der Schließstellung S1, in einer Zwischenstellung S2 und in einer maximalen Öffnungsstellung S3 dargestellt. Aus dieser Darstellung ist ersichtlich, dass das Bedienelement 30 einen Betätigungsabschnitt 32 und einen Verriegelungsabschnitt 34 aufweist. Das Scharnier 24 ist an einem hinteren Randabschnitt 36 des Deckels 14 vorgesehen. Das Scharnier 24 weist einen vom Deckel 14 abgewandten Kopplungsabschnitt 38 auf. Das heißt, dass der Deckel 14 und der Kopplungsabschnitt 38 mittels des Scharniers gelenkig miteinander verbunden sind. Der Kopplungsabschnitt 38 ist in einer an der Rückwand 18 des Behälters 12 ausgebildeten Kopplungsöffnung 40 aufgenommen.

Figur 2C zeigt eine beispielhafte Ausführung des Deckels 14 mit zwei Scharnieren 24. An jedem Scharnier 24 ist ein jeweiliger Kopplungsabschnitt 38 vorgesehen. An der Rückwand 18 des Behälters sind jeweilige Kopplungsöffnungen 40 ausgebildet. Wie durch die gestrichelten Pfeile angedeutet, können die Kopplungsabschnitte 38 in die Kopplungsöffnungen 40 eingeführt bzw. eingesteckt werden. Im vorliegenden Beispiel sind die Kopplungsöffnungen 40 als Steckaufnahmen ausgebildet, in die ein jeweiliger Kopplungsabschnitt 38, der auch als Stecklasche bezeichnet werden kann, einführbar und fixierbar ist. Durch eine derartige Verbindung zwischen Deckel 14 und Behälter 12 ist gewährleistet, dass der Behälter 12 unabhängig vom Deckel 14 in einer Fahrzeugkarosserie eingebaut werden kann, insbesondere darin befestigt werden kann, und der Deckel 14 anschließend am Behälter 12 mittels der Kopplungsabschnitte 38 am Behälter 12, insbesondere den Kopplungsöffnungen 40 angebracht werden kann.

Im Bereich des Bodens 22 des Behälters 12 sind nach unten ausgebildete, vorstehende Noppen 42 vorgesehen. Die Noppen 42 dienen insbesondere dazu, den Behälter 12 an einem hier nicht dargestellten Teil einer Fahrzeugkarosserie befestigen zu können. Insbesondere können an einer Fahrzeugkarosserie zu den Noppen 42 korrespondierend ausgeführte Aussparungen oder Vertiefungen vorgesehen sein. Neben den Noppen 42, die nicht zwingend bei jeder denkbaren Ausführungsform eines Behälters 12 vorhanden sein müssen, kann der Behälter 12 mittels Befestigungsbügeln 43 mit der Fahrzeugkarosserie verbunden werden. Beispielhafte Anordnungen von solchen Befestigungsbügeln 43 sind in den Figuren 1, 2A und 2C gezeigt.

Die Noppen 42 können auch dazu eingerichtet sein, dass eventuell im Behälter 12 befindliche Flüssigkeit, wie beispielsweise Wasser, abgelassen werden kann. Hierzu kann in einem oder mehreren entsprechenden Noppen 42 ggf. eine Öffnung vorgesehen sein. Eine solche Öffnung kann mittels eines entfernbaren Stopfens verschlossen werden oder kann ohne Verschluss einfach offengelassen werden. Bei Ausführungsformen des Behälters, die keine hier dargestellten Noppen 42 aufweisen, kann eine solche Öffnung allgemein möglichst an einem tiefsten Punkt des wannenartigen Behälters 12 vorgesehen sein.

Die in Figur 2A dargestellten Stellung S1, S2 und S3 des Deckels 14 sind schematisch und vereinfacht nochmals in der Figur 2B wiedergegeben. Aus dieser Darstellung ist ersichtlich, dass zwischen der Schließstellung S1 und der maximalen Öffnungsstellung ein maximaler Öffnungswinkel Wmax gebildet wird. Der maximale Öffnungswinkel Wmax beträgt etwa 70° bis 85°, vorzugsweise etwa 75° bis 80°. In einem Bereich Wauf wird der Deckel 14 durch das Scharnier 24 selbsttätig in geöffneter Stellung gehalten. Der Winkelbereich Wauf erstreckt sich ausgehend von dem maximalen Öffnungswinkel Wmax etwa 35° bis 50°, vorzugsweise etwa 40° bis 45° in Richtung der Schließstellung S1. In einem Bereich Wzu wird der Deckel 14 durch das Scharnier nicht selbsttätig gehalten, sondern der Deckel 14 fällt in diesem Bereich Wzu schwerkraftbedingt selbsttätig in die Schließstellung. Der Bereich Wzu beträgt ausgehend von der Schließstellung S1 etwa 15° bis 30°, vorzugsweise etwa 20° bis 25°. Zwischen den Bereichen Wzu und Wauf ist ein Zwischenbereich Wm vorgesehen. Der Zwischenbereich Wm muss beim Öffnen des Deckels 14 bis zu einem Minimalöffnungswinkel Wmin überwunden werden, so dass der Deckel 14 ab diesem Minimalöffnungswinkel Wmin bis zum maximalen Öffnungswinkel Wmax in jeder beliebigen Öffnungsstellung innerhalb des Bereiches Wauf durch das Scharnier gehalten wird. Unterhalb des minimalen Öffnungswinkels Wmin lässt die durch das Scharnier 24 ausgeübte Haltekraft nach, so dass der Deckel unterhalb des minimalen Öffnungswinkels Wmin, insbesondere in dem Bereich Wzu selbsttätig in seine Schließstellung S1 fällt. Das Scharnier 24 bzw. beide Scharniere 24 können als Reibscharniere ausgeführt sein, die insbesondere basierend auf den gewählten Winkelbereichen Wzu, Wauf eingestellt werden können.

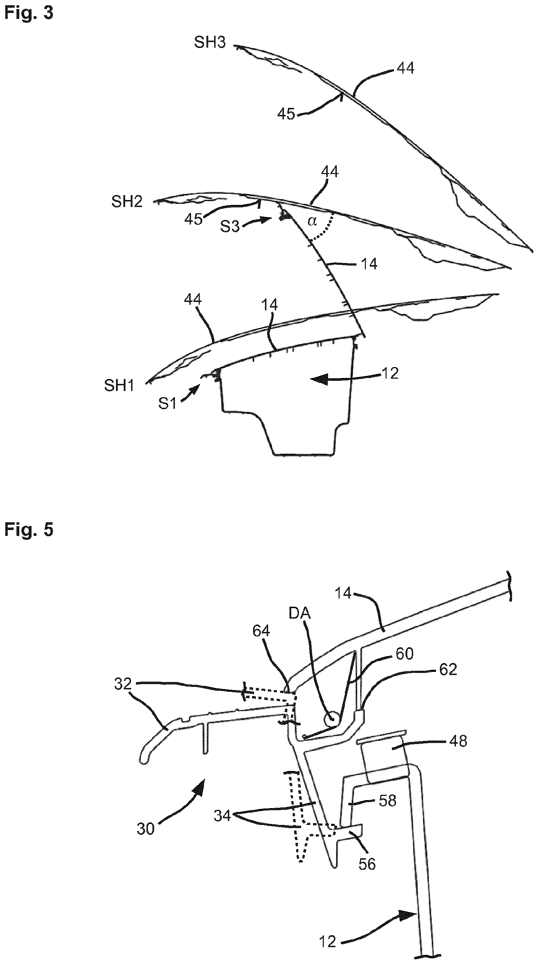

Figur 3 zeigt in einer vereinfachten und schematischen Schnittdarstellung das Staufach 10 mit Behälter 12 und Deckel 14. Der Deckel 14 ist hier in der maximalen Öffnungsstellung S3 dargestellt. Ferner ist in Figur 3 ein Haubenelement 44 einer Fahrzeugkarosserie dargestellt. Das Haubenelement 44, das hier eine Vorderklappe bzw. Frontklappe eines Fahrzeugs ist, ist ebenfalls in unterschiedlichen Stellungen dargestellt, insbesondere einer Schließstellung SH1, einer Zwischenstellung SH2 und einer maximalen Öffnungsstellung SH3.

In der hier dargestellten Zwischenstellung SH2 kommt das Haubenelement 44 mit seiner Innenseite 45 in Kontakt mit dem Deckel 14 des Staufachs 10. Der Kontakt zwischen Haubenelement 44 und Deckel 14 kann in jeder Öffnungsstellung des Deckels 14 innerhalb des Winkelbereichs Wauf (siehe Fig. 2B) auftreten, in dem der Deckel 14 durch das Scharnier 24 in einer Öffnungsstellung gehalten wird. Zwischen dem Deckel 14 und dem Haubenelement 44 ist in einer solchen Relativstellung dieser beiden Bauteile zueinander ein spitzer Winkel α ausgebildet. Der Winkel zwischen dem Deckel 14 und dem Haubenelement 44 ist so gewählt, dass der Deckel 14 durch das sich schließende Haubenelement 44 nach unten in Richtung seiner Schließstellung S1 bewegt wird. Wenn sich der Deckel 14 in seiner maximalen Öffnungsstellung S3 befindet, beträgt der zwischen dem Deckel 14 und dem Haubenelement 44 gebildete Winkel α 60° oder weniger, insbesondere 50° oder weniger. Hierdurch wird gewährleistet, dass sich Deckel 14 beim Entlanggleiten am Haubenelement 44 nicht verkantet, so dass sowohl der Deckel 14 als auch das Haubenelement 44 zuverlässig in ihre jeweilige Schließstellung S1 bzw. SH1 bewegt werden können. Ferner wird darauf hingewiesen, dass der Deckel 14 im Winkelbereich Wzu (Fig. 2B) schwerkraftbedingt selbsttätig in seine Schließstellung S1 fällt. Es kann daher davon ausgegangen werden, dass sich der Deckel 14, sofern er mittels des Haubenelement 44 nach unten beweget wird, im Winkelbereich Wzu rasch vom Haubenelement 44 weg bewegt, insbesondere bewegt sich der Deckel im Winkelbereich Wzu üblicherweise schneller nach unten als das Haubenelement 44.

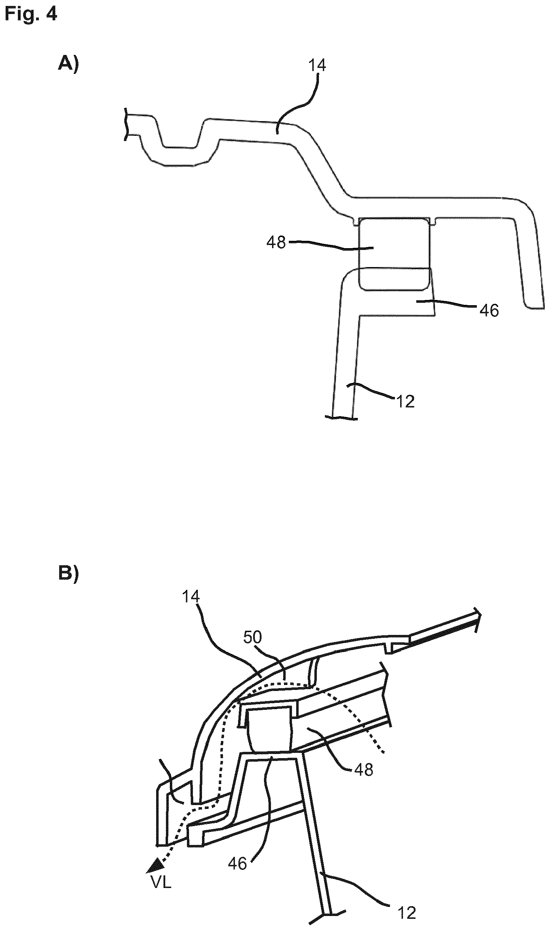

Die Figuren 4A und 4B zeigen in vereinfachten und schematischen Teilschnittdarstellungen den Deckel 14 und den Behälter 12, wobei sich der Deckel 14 in seiner Schließstellung S1 (Fig. 2A und 2B) befindet. Zwischen einem oberen Randabschnitt 26 und einer Unterseite des Deckels 14 ist ein Dichtungselement 48 vorgesehen. Das Dichtungselement 48 kann entlang des gesamten oberen Randabschnitts 26 des Behälters 12 vorgesehen sein. Das Dichtungselement 48 kann also umlaufend am Behälter 12 oder umlaufend am Deckel 14 angeordnet sein. Am Deckel 14 kann ferner einen umlaufenden Deckelrandabschnitt 49 aufweisen. Der Deckelrandabschnitt 49 erstreckt sich in der Schließstellung des Deckels 14 über den oberen Randabschnitt 26 bzw. den oberen Rand, auf dem das Dichtungselement 48 aufliegt, des Behälters 12 hinaus nach unten, in Richtung des Behälters 12.

Fig. 4B zeigt eine mögliche Ausführungsform, bei der oberhalb des Dichtungselements 48 ein Entlüftungskanal 50 ausgebildet ist, durch den, insbesondere beim Schließen des Deckels 14, verdrängte Luft VL aus dem Inneren des Staufachs 10 entweichen kann. Der Entlüftungskanal 50 ist insbesondere so ausgeführt, dass er eine Art Labyrinthdichtung bildet, so dass ein Eindringen von Wasser oder Schmutz aus der Umgebung in das geschlossene Staufach 10 nahezu vollständig verhindert werden kann.

Alternativ zu einem Entlüftungskanal 50, kann auch daran gedacht werden, dass an dem Dichtungselement 48 wenigstens eine Ausnehmung oder ein Einschnitt vorgesehen wird, durch den verdrängte Luft aus dem Innenraum des Staufasch entweichen kann beim Schließen des Deckels. Eine derartige Aussparung kann beispielsweise an mehreren Stellen entlang des Dichtungselements 48 vorgesehen sein. Dabei können die Aussparungen derart dimensioniert werden, dass das zu verdrängende Luftvolumen zuverlässig entweichen kann und dass das Eindringen von Wasser oder Schmutz durch diese Aussparungen nahezu vollständig vermieden werden kann.

Figur 5 zeigt in einer vereinfachten und schematischen Schnittdarstellung das Bedienelement 30. Das Bedienelement 30 ist hebelartig ausgebildet und weist den Betätigungsabschnitt 32 und den Rastabschnitt 34 auf. Der Betätigungsabschnitt 32 erstreckt sich bezogen auf den Deckel 14 nach vorne. Der Rastabschnitt 34 erstreckt sich bezogen auf dem Deckel 14 nach unten. Am Rastabschnitt 34 ist ein Rastelement 56 vorgesehen, das in der hier dargestellten Verriegelungsstellung in Eingriff steht mit einem am Behälter 12 ausgebildeten korrespondierenden Rastvorsprung 58. Das Bedienelement 30 ist um eine Drehachse DA beweglich, so dass es von der Verriegelungsstellung in eine Entriegelungsstellung bewegt werden kann. Die Entriegelungsstellung ist gestrichelt dargestellt. Mittels einer Federanordnung 60 ist das Bedienelement 30 in seine Verriegelungsstellung vorgespannt. Das heißt, dass nach dem Entriegeln und Öffnen des Deckels 14, das Bedienelement 30 relativ zum Deckel 14 wieder in die in Figur 5 dargestellte Position überführt wird. Wird der Deckel 14 geschlossen, gleitet das Rastelement 56 außen entlang des Rastvorsprungs 58 nach unten. Dabei wird das Bedienelement 30 entgegen der Federvorspannkraft der Federanordnung 60 um die Drehachse DA verschwenkt. Sobald das Rastelement 56 am Rastvorsprung 58 vorbei nach unten geglitten ist, rastet das Rastelement 56 aufgrund der Federkraft entlang der Unterseite des Rastvorsprungs 58 ein. Die Bewegung des Bedienelements 30 um die Drehachse DA ist eingeschränkt durch zwei deckelseitige Anschläge 62, 64, an denen das Bedienelement in der Verriegelungsstellung bzw. der Entriegelungsstellung anliegen kann. Der Vollständigkeit halber ist in Figur 5 auch noch das Dichtelement 48 gezeigt. Mittels des Bedienelements 30 kann der Deckel 14 einhändig entriegelt und geöffnet werden, insbesondere nach oben in eine Öffnungsstellung verschwenkt werden. Beim selbsttätigen Schließen des Deckels 14 erfolgt zusätzlich ein selbsttätiges Verriegeln des Deckels 14 an dem Behälter 12, so dass das Staufach 10 bei geschlossenem Haubenelement 44 zu jeder Zeit zuverlässig und dicht abgedeckt ist.

## Patentansprüche

1. Staufach für ein Kraftfahrzeug, wobei das Staufach (10) dazu eingerichtet ist unterhalb eines Haubenelements (44) des Kraftfahrzeugs angeordnet zu werden, wobei das Haubenelement (44) einen Teil der Außenhaut des Kraftfahrzeugs bildet, wobei das Staufach (10) umfasst:
einen wannenartigen Behälter (12);
einen mit dem Behälter (12) verbindbaren oder verbundenen Deckel (14), wobei der Deckel (14) relativ zum Behälter (12) um eine Schwenkachse (SA) zwischen einer Schließstellung (S1) und einer Öffnungsstellung (S2, S3) beweglich ist und wobei der Deckel (14) eine Verriegelungseinrichtung (30) aufweist, die dazu eingerichtet ist, den Deckel (14) in seiner Schließstellung (S1) an dem Behälter (12) lösbar zu verriegeln,
eine Scharniervorrichtung (24), welche die Schwenkbewegung des Deckels (14) relativ zum Behälter (12) ermöglicht,
**dadurch gekennzeichnet, dass**
die Scharniervorrichtung (24) derart ausgebildet ist, dass der Deckel (14) ab einem Minimalöffnungswinkel (Wmin) und bis zu einem Maximalöffnungswinkel (Wmax) selbsttätig in einer beliebigen Öffnungsstellung (S3) gehalten wird, und dass der Deckel (14) unterhalb des Minimalöffnungswinkels (Wmin) schwerkraftbedingt selbsttätig in seine Schließstellung (S1) übergeht, und
die Verriegelungseinrichtung (30) ein am Deckel abgestütztes und federvorgespanntes Hebelelement (30) aufweist mit einem Rastabschnitt (34, 56) und einem Betätigungsabschnitt (32),
wobei der Rastabschnitt (54, 56) in der Schließstellung (S1) des Deckels (14) in Eingriff steht mit einem korrespondierenden Stützabschnitt (58) des Behälters (12), so dass sich die Verriegelungseinrichtung (30) in einer Verriegelungsstellung befindet, und wobei die Verrieglungseinrichtung (30) dazu eingerichtet ist, beim schwerkraftbedingten Schlie-βen des Deckels (12) selbsttätig die Verriegelungsstellung einzunehmen.

2. Staufach nach Anspruch 1, **dadurch gekennzeichnet, dass** der Betätigungsabschnitt (32) dazu eingerichtet ist, den Rastabschnitt (34, 56) relativ zum Behälter (12) und entgegen der Federvorspannkraft zu bewegen, so dass der Eingriff zwischen dem Rastabschnitt (34, 56) und dem Stützabschnitt (58) gelöst wird.

3. Staufach nach Anspruch 1 oder 2, **dadurch gekennzeichnet, dass** der Maximalöffnungswinkel (Wmax) des Deckels (14) derart begrenzt ist, dass zwischen einer Oberseite des Deckels (14) und einer Unterseite des Haubenelements (44) ein spitzer Winkel (α) gebildet ist, wenn das Haubenelement (44) bei maximal geöffnetem Deckel (14) an diesem anliegt.

4. Staufach nach einem der vorhergehenden Ansprüche, **dadurch gekennzeichnet, dass** in der Schließstellung (S1) des Deckels (14) zwischen dem Deckel (14) und dem Behälter (12) entlang eines dem Deckel (14) zugewandten Behälterrandabschnitts (26) eine Dichtungsanordnung (48) vorgesehen ist, so dass der Behälter (12) durch den Deckel (14) dicht verschlossen ist.

5. Staufach nach Anspruch 4, **dadurch gekennzeichnet, dass** die Dichtungsanordnung (48) an dem Deckel (14) oder/und an dem Behälterrandabschnitt (26) angeordnet ist.

6. Staufach nach einem der vorhergehenden Ansprüche, **dadurch gekennzeichnet, dass** der Deckel (14) einen umlaufenden Deckelrandabschnitt (49) aufweist, der sich in der Schließstellung des Deckels (14) über eine Behälteroberkante (26) hinaus nach unten erstreckt.

7. Staufach nach Anspruch 6, **dadurch gekennzeichnet, dass** zwischen einer Innenseite des Deckelrandabschnitts (49) und einer Außenseite eines Behälterrandabschnitts (26) ein Entlüftungsweg (50) ausgebildet ist zwischen dem Innenraum des Behälters (12) und der Umgebung, wobei der Entlüftungsweg (50) insbesondere durch eine Aussparung in der Dichtungsanordnung (48) gebildet ist.

8. Staufach nach einem der vorhergehenden Ansprüche, **dadurch gekennzeichnet, dass** die Scharniervorrichtung (24) ein Reibscharnier ist.

9. Staufach nach einem der vorhergehenden Ansprüche, **dadurch gekennzeichnet, dass** der Behälter (12) und der Deckel (14) aus einem witterungsbeständigen Kunststoff hergestellt sind.

10. Staufach nach einem der vorhergehenden Ansprüche, **dadurch gekennzeichnet, dass** die Scharniervorrichtung (24) mit dem Deckel (14) verbunden ist und einen vom Deckel (24) abgewandten freien Kopplungsabschnitt (38) aufweist, der in einer korrespondierende Kopplungsöffnung (40) an dem Behälter lösbar befestigt ist, wobei die Kopplungsöffnung (40) an einer Außenseite (18) des Behälters (12) angeordnet ist.

11. Kraftfahrzeug mit einer Karosserie, wobei die Karosserie wenigstens ein Haubenelement (44) umfasst, das in einem geschlossenen Zustand einen von der Karosserie begrenzten Stauraum abdeckt, **dadurch gekennzeichnet, dass** in dem Stauraum ein Staufach (10) nach einem der vorhergehenden Ansprüche aufgenommen ist.

## Claims

1. Storage compartment for a motor vehicle, wherein the storage compartment (10) is designed to be arranged beneath a hood element (44) of the motor vehicle, wherein the hood element (44) forms a part of the outer skin of the motor vehicle, wherein the storage compartment (10) comprises:
a trough-like container (12),
a lid (14) that can be connected or is connected to the container (12), wherein the lid (14) is movable relative to the container (12) about a pivot axis (SA) between a closed position (S1) and an open position (S2, S3) and wherein the lid (14) has a locking apparatus (30), which is designed to releasably lock the lid (14), in its closed position (51), to the container (12),
a hinge device (24), which facilitates the pivoting movement of the lid (14) relative to the container (12),
**characterized in that**
the hinge device (24) is designed such that, from a minimum opening angle (Wmin) and up to a maximum opening angle (Wmax), the lid (14) is automatically held in any open position (S3) and that, below the minimum opening angle (Wmin), the lid (14) automatically moves to its closed position (S1) under the effect of gravity, and
the locking apparatus (30) has a spring-loaded lever element (30) supported on the lid with a latching section (34, 56) and an actuating section (32),
wherein, when the lid (14) is in the closed position (51), the latching section (54, 56) engages with a corresponding support section (58) of the container (12), such that the locking apparatus (30) is in a locked position, and wherein the locking apparatus (30) is designed to automatically adopt the locked position when the lid (12) closes under the effect of gravity.

2. Storage compartment according to claim 1, **characterized in that** the actuating section (32) is designed to move the latching section (34, 56) relative to the container (12) and against the spring-loaded force such that the engagement between the latching section (34, 56) and the support section (58) is released.

3. Storage compartment according to claim 1 or 2, **characterized in that** the maximum opening angle (Wmax) of the lid (14) is limited such that an acute angle (α) is formed between the upper side of the lid (14) and an underside of the hood element (44), when the hood element (44) rests against it with a fully opened lid (14).

4. Storage compartment according to any of the preceding claims, **characterized in that**, when the lid (14) is in the closed position (51), a gasket arrangement (48) is provided between the lid (14) and the container (12) along a container edge section (26) facing the lid (14) such that the container (12) is tightly closed by the lid (14).

5. Storage compartment according to claim 4, **characterized in that** the gasket arrangement (48) is arranged on the lid (14) and/or on the container edge section (26).

6. Storage compartment according to any of the preceding claims, **characterized in that** the lid (14) has a continuous lid edge section (49), which extends downwards beyond an upper edge of the container (26) when the lid (14) is in the closed position.

7. Storage compartment according to claim 6, **characterized in that**, between an inner side of the lid edge section (49) and an outer side of a container edge section (26), a ventilation path (50) is formed between the interior of the container (12) and the environment, wherein the ventilation path (50) is formed, in particular, by means of a recess in the gasket arrangement (48).

8. Storage compartment according to any of the preceding claims, **characterized in that** the hinge device (24) is a friction hinge.

9. Storage compartment according to any of the preceding claims, **characterized in that** the container (12) and the lid (14) are made from a weather-resistant plastic.

10. Storage compartment according to any of the preceding claims, **characterized in that** the hinge device (24) is connected to the lid (14) and has a free coupling section (38) facing away from the lid (24), which is releasably attached to the container in a corresponding coupling opening (40), wherein the coupling opening (40) is arranged on an outer side (18) of the container (12).

11. Motor vehicle with a body, wherein the body comprises at least one hood element (44), which covers a storage space bounded by the body, in a closed state, **characterized in that** a storage compartment (10) according to any of the preceding claims is incorporated into the storage space.

## Revendications

1. Compartiment de rangement pour un véhicule automobile, dans lequel le compartiment de rangement (10) est configuré pour être disposé sous un élément de capot (44) du véhicule automobile, dans lequel l'élément de capot (44) forme une partie du revêtement extérieur du véhicule automobile, dans lequel le compartiment de rangement (10) comprend :
un récipient en forme d'auge (12) ;
un couvercle (14) pouvant être connecté ou connecté au récipient (12), dans lequel le couvercle (14) est mobile par rapport au récipient (12) autour d'un axe de pivotement (SA) entre une position de fermeture (S1) et une position d'ouverture (S2, S3) et dans lequel le couvercle (14) présente un appareil de verrouillage (30) qui est conçu pour verrouiller de manière amovible le couvercle (14) dans sa position de fermeture (S1) sur le récipient (12),
un dispositif à charnière (24) qui permet le mouvement de pivotement du couvercle (14) par rapport au récipient (12),
**caractérisé en ce que**
le dispositif à charnière (24) est conçu de sorte que le couvercle (14) est maintenu automatiquement dans une position d'ouverture (S3) quelconque à partir d'un angle d'ouverture minimal (Wmin) et jusqu'à un angle d'ouverture maximal (Wmax), et **en ce que** le couvercle (14) passe automatiquement dans sa position de fermeture (S1) en dessous de l'angle d'ouverture minimal (Wmin) sous l'effet de la gravité, et
l'appareil de verrouillage (30) présente un élément de levier (30) supporté sur le couvercle et précontraint par ressort avec une section d'encliquetage (34, 56) et une section d'actionnement (32),
dans lequel la section d'encliquetage (54, 56), dans la position de fermeture (S1) du couvercle (14), est en prise avec une section de support correspondante (58) du récipient (12), de sorte que l'appareil de verrouillage (30) se trouve dans une position de verrouillage, et dans lequel l'appareil de verrouillage (30) est configuré pour prendre automatiquement la position de verrouillage lors de la fermeture du couvercle (12) sous l'effet de la gravité.

2. Compartiment de rangement selon la revendication 1, **caractérisé en ce que** la section d'actionnement (32) est configurée pour déplacer la section d'encliquetage (34, 56) par rapport au récipient (12) et à l'encontre de la force de précontrainte de ressort, de sorte que l'engagement entre la section d'encliquetage (34, 56) et la section de support (58) est relâché.

3. Compartiment de rangement selon la revendication 1 ou 2, **caractérisé en ce que** l'angle d'ouverture maximal (Wmax) du couvercle (14) est limité de sorte qu'un angle aigu (α) est formé entre un côté supérieur du couvercle (14) et un côté inférieur de l'élément de capot (44) lorsque l'élément de capot (44) repose contre le couvercle ouvert au maximum (14).

4. Compartiment de rangement selon l'une quelconque des revendications précédentes, **caractérisé en ce que**, lorsque le couvercle (14) se trouve dans la position de fermeture (S1), un agencement d'étanchéité (48) est prévu entre le couvercle (14) et le récipient (12), le long d'une section de bord de récipient (26) tournée vers le couvercle (14), de sorte que le récipient (12) soit fermé hermétiquement par le couvercle (14).

5. Compartiment de rangement selon la revendication 4, **caractérisé en ce que** l'arrangement d'étanchéité (48) est disposé sur le couvercle (14) ou/et sur la section de bord de récipient (26).

6. Compartiment de rangement selon l'une quelconque des revendications précédentes, **caractérisé en ce que** le couvercle (14) présente une section de bord de couvercle périphérique (49) qui s'étend vers le bas au-delà d'un bord supérieur de récipient (26) dans la position de fermeture du couvercle (14).

7. Compartiment de rangement selon la revendication 6, **caractérisé en ce qu'**un chemin de purge d'air (50) est formé entre un côté intérieur de la section de bord de couvercle (49) et un côté extérieur d'une section de bord de récipient (26) entre l'espace intérieur du récipient (12) et l'environnement, dans lequel le chemin de purge (50) est formé en particulier par un évidement dans l'agencement d'étanchéité (48).

8. Compartiment de rangement selon l'une quelconque des revendications précédentes, **caractérisé en ce que** le dispositif à charnière (24) est une charnière à friction.

9. Compartiment de rangement selon l'une quelconque des revendications précédentes, **caractérisé en ce que** le récipient (12) et le couvercle (14) sont fabriqués dans une matière plastique résistante aux intempéries.

10. Compartiment de rangement selon l'une quelconque des revendications précédentes, **caractérisé en ce que** le dispositif à charnière (24) est connecté au couvercle (14) et présente une section de couplage libre (38) opposée au couvercle (24), qui est fixée de manière amovible au récipient dans une ouverture de couplage correspondante (40), dans lequel l'ouverture de couplage (40) est disposée sur un côté extérieur (18) du récipient (12).

11. Véhicule automobile avec une carrosserie, dans lequel la carrosserie comprend au moins un élément de capot (44) qui, dans un état fermé, couvre un espace de rangement délimité par la carrosserie, **caractérisé en ce qu'**un compartiment de rangement (10) selon l'une quelconque des revendications précédentes est reçu dans l'espace de rangement.
